# EUROPÄISCHE PATENTSCHRIFT

(11) **EP 1 655 862 B1**
(45) Veröffentlichungstag und Bekanntmachung des Hinweises auf die Patenterteilung: **01.07.2009**
(21) Anmeldenummer: 04026175.2
(22) Anmeldetag: 04.11.2004
(51) Int. Cl.: H04B 7/26

(54) **Verfahren zum Auswählen und Zuweisen einer Funkfrequenz**
Method for selecting and allocating a radio frequency
Procédé de sélection et d'allocation d'une fréquence de radio

(43) Veröffentlichungstag der Anmeldung: 10.05.2006
(73) Patentinhaber: EADS Secure Networks GmbH, 89077 Ulm (DE)
(72) Erfinder: Wiederspahn, Felix, Dipl.-Phys., 89250 Senden (DE)
(74) Vertreter: Meel, Thomas

(56) Entgegenhaltungen:
- EP-A- 1 037 482
- EP-A- 1 209 863
- DE-A1- 4 232 294
- GB-A- 2 282 299
- US-A- 5 839 075

## Beschreibung

Die Erfindung bezieht sich auf ein Verfahren zur Verbesserung der Ausnutzung eines vorgegebenen Funkfrequenzspektrums, das in einen Frequenzplanmit mehreren vorgegebenen Funkfrequenzen unterteilt ist, die jeweils für bewegliche Funkteilnehmer unter Berücksichtigung der augenblicklichen geographischen Position derselben verfügbar sein sollen.

GB 2 282 299 A beschreibt ein zellulares Funksystem, in dem mehrere Basisstationen, die jeweils einer Zelle zugeordnet sind, mit einer zentralen Prozessoreinheit verbunden sind. Diese hat eine Datenbank, die Information über Basisstationsort und Frequenzzuweisung enthält. Bei einem Ausbau dieses Funksystems mit neuen Stationen wird der Ort einer neuen, ggf. beweglichen Basisstation mittels eines GPS-Empfängers ermittelt und an die zentrale Prozessoreinheit berichtet. Diese Information wird dort mit bekannter Orts- und Frequenzzuweisungsinformation für andere Basisstationen verglichen, und die neue Basisstation und die anderen Basisstationen werden dann so gesteuert, das sie als Ergebnis des Vergleichs neue Frequenzen belegen, um dadurch automatisch den Frequenzzuweisungsplan zu modifizieren und zu aktualisieren. Mobilfunkstationen können mit den Basisstationen somit immer nur auf denjenigen Frequenzen verkehren, die den Basisstationen zugewiesen sind.

US 5 839 075 A beschreibt ein Verfahren zur Zuweisung eines Funkkanals für die Kommunikation zwischen einer Mobilfunkstation und einer ortfesten Basisstation innerhalb eines zellularen Mobilfunksystems. Hierbei werden mehrere Steuerkanäle und Kommunikationskanäle innerhalb des zellularen Netzwerkspektrums verwendet, indem die Mobilfunkstation veranlasst wird, die Empfangssignalstärken der Steuerkanäle zu messen. Ein Satz Kommunikationskanäle, die dem gemessenen Steuerkanal der geringsten Empfangssignalstärke zugeordnet sind, wird ermittelt. Die Mobilfunkstation wird dann veranlasst, die Empfangssignalstärken dieses Satzes Kommunikationskanäle zu messen und dann denjenigen unter ihnen für den Nachrichtenverkehr auszuwählen, der die geringste Empfangssignalstärke hat. Die Steuerung dieses Vorgangs erfolgt durch die Basisstation. Das Ziel dieser Maßnahme ist, Gleichkanalinterferenzen zu minimieren.

In DE 42 32 294 A1 ist eine Einrichtung zum Steuern eines Schiffsfunkgeräts angegeben, die ein Verzeichnis der Landfunkstellen und der von diesen benutzten Frequenzen enthält. Die Einrichtung ist dazu ausgelegt, unter Berücksichtigung der augenblicklichen geographischen Lage des Schiffs und der Uhrzeit eine geeignete Frequenz für eine gewünschte Funkverbindung zu einem anzurufenden Teilnehmer herzustellen. Die Einrichtung berücksichtigt somit die den Kurzwellen eigentümliche Abhängigkeit der Übertragungsbedingungen von Tageszeit und Frequenzband. Eine Berücksichtigung der Bedürfnisse anderer, innerhalb der Reichweite der betreffenden Schiffsfunkstation befindlicher Funkstationen findet dabei nicht statt.

Die EP 1 209 863 A2 und die EP 1 037 482 A2 betreffen jeweils mobile Funkgeräte, welche abhängig vom Ergebnis einer internen Positionsermittlung das in dem jeweiligen Territorium zulässige Betriebs-Frequenzband automatisch einstellen.

In den heute gängigen Bündelfunksystemen, wie GSM, Tetra und Tetrapol, werden mobile Funkgeräte betrieben. Wenn diese mobilen Funkgeräte im Netzmodus arbeiten, sind sie über Funk mit Basisstationen verbunden. In diesem Falle werden die von den mobilen Funkgeräten verwendeten Funkkanäle von der Basisstation ausgewählt und den mobilen Funkgeräten zugewiesen, ohne dass dabei der aktuelle Standort des mobilen Funkgeräts berücksichtigt wird.

Es gibt andererseits Betriebsarten, bei denen der Benutzer eines mobilen Funkgeräts, in der Regel nach Überprüfung des Frequenzspektrums oder aufgrund einer entsprechenden Verabredung mit einem Kommunikationspartner, selbst entscheidet, welche Funkfrequenz er benutzen möchte. Dieses ist zum Beispiel im sogenannten Direktmodus der Fall, in dem eine Funkkommunikation ohne ortsfeste Infrastruktur stattfindet.

Sehr häufig sind die für den Funkbetrieb im Direktmodus zugelassenen Frequenzen vom jeweiligen geographischen Gebiet abhängig, zum Beispiel weil Nachbarstaaten sich an den gemeinsamen Grenzen das verfügbare Frequenzspektrum teilen müssen. Einerseits brauchen die Funkgeräte im Zentrum "ihres" Territoriums bei der Frequenzwahl Probleme, die nur im Bereich der Landesgrenzen vorliegen, an sich nicht zu berücksichtigen, andererseits sind dieselben Funkgeräte landesweit mobil, was im Bereich der Landesgrenzen zu Störungen mit Funkdiensten im Nachbarland führen kann. Damit von solchen landesweit mobilen Funkgeräten kein Konflikt mit Funkdiensten im Nachbarland hervorgerufen wird, wenn sich ein Funkgerät den Landesgrenzen annähert, werden von den mobilen Funkgeräten üblicherweise ausschließlich jene Frequenzen aus dem Frequenzplan benutzt, die in Abstimmung mit den Aufsichtsorganen des Nachbarlandes für das betreffende Land reserviert sind. Dadurch aber wird das verfügbare Frequenzspektrum insgesamt schlecht ausgenutzt.

Die Bezeichnung "Land" soll hier nicht einengend verstanden werden, denn gleiche Situationen ergeben sich auch innerhalb eines Landes oder Territoriums, das in mehrere Regionen mit voneinander unabhängig arbeitenden mobilen Funkdiensten unterteilt ist.

Es gibt weiterhin auch Situationen, in denen innerhalb eines Territoriums ortsfeste Funkdienste begrenzter Reichweite einen Vorrang gegenüber anderen, mobilen Funkteilnehmern haben, weshalb es angezeigt ist, den vorrangigen Funkdiensten bestimmte Funkfrequenzen zu reservieren. Enthält man den mobilen Funkteilnehmern diese reservierten Funkfrequenzen im gesamten Territorium vor, also auch in solchen Regionen, die von den Vorrang genießenden Funkdiensten gar nicht erreicht werden, ergibt sich ebenfalls eine schlechte Ausnutzung des verfügbaren Frequenzspektrums.

Der Erfindung liegt daher die Aufgabe zugrunde, ein Verfahren anzugeben, das eine bessere Ausnutzung eines vorgegebenen Frequenzspektrums zulässt.

Diese Aufgabe wird durch die im Anspruch 1 angegebene Erfindung gelöst. Eine Funkgerät zur Ausführung des Verfahrens ist Gegenstand des Anspruchs 8. Vorteilhafte Ausgestaltungen der Erfindung sind Gegenstand der jeweiligen Unteransprüche.

Die Erfindung schafft ein Verfahren und ein Funkgerät, bei dem die Frequenzwahl und - zuweisung ortsabhängig ist. Über ein geeignetes Ortungsverfahren, bei dem beispielsweise das unter dem Kürzel "GPS" bekannt gewordene, satellitengestützte System eingesetzt werden kann, wird der einem mobilen Funkgerät zur Verfügung gestellte, dort gespeicherte Frequenzplan abhängig vom territorialen Aufenthaltsort des Funkgeräts innerhalb des Funkgeräts automatisch und dynamisch aufbereitet. Befindet sich ein mobiles Funkgerät in einem territorialen Grenzbereich, in dem bestimmte Funkfrequenzen innerhalb eines Frequenzspektrums für Funkdienste des anderen Territoriums reserviert sind, werden diese reservierten Funkfrequenzen aus dem Plan der Frequenzen, die dem mobilen Funkgerät zur Auswahl zur Verfügung stehen, ausgeblendet. Diese Ausblendung umfasst gegebenenfalls eine Sperrung, so dass es dem Funkteilnehmer unmöglich gemacht wird, eine Frequenz einzustellen, die für Funkdienste des anderen Territoriums reserviert ist.

Die erwähnte Ausblendung kann beispielsweise so erfolgen, dass in einem auf einer Anzeigeeinrichtung des Funkgerätes angezeigten Frequenzplan die für das andere Territorium reservierten Frequenzen nicht erscheinen. Im Funkgerät kann zusätzlich eine Sperreinrichtung vorgesehen sein, die verhindert, dass die für das andere Funkterritorium reservierten Funkfrequenzen eingestellt werde können, wobei die Sperreinrichtung von einer Ortungseinrichtung in Abhängigkeit vom jeweiligen Standort des Funkgerätes gesteuert wird.

Das erfindungsgemäße Verfahren ermöglicht es einem Funkteilnehmer, dann auf sämtliche Frequenzen innerhalb des Frequenzplans zuzugreifen, wenn sich das Funkgerät nicht in einem territorialen Bereich befindet, in dem Reservierungen für andere Funkdienste berücksichtigt werden müssen. Befindet sich also das Funkgerät beispielsweise im Zentrum "seines" Territoriums, wo Störungen mit fremden Funkdiensten ausgeschlossen sind, besteht vollkommene Wahlfreiheit unter den zur Verfügung stehenden Funkfrequenzen. Auf diese Weise wird eine optimal Ausnutzung des gesamten Frequenzspektrums möglich.

Die Erfindung macht es ferner möglich, ein gegebenes Territorium in mehrere Regionen zu unterteilen, in denen für voneinander unabhängige, bevorrechtigte, feste Funkdienste aus dem gemeinsamen Frequenzplan ggf. unterschiedliche Funkfrequenzen reserviert sind. Diese reservierten Frequenzen werden in den mobilen Funkgeräten in Abhängigkeit von deren augenblicklichen geographischen Position aus- bzw. eingeblendet und gegen eine Benutzung gesperrt bzw. dafür freigegeben.

Es kann dabei allerdings vorkommen, dass ein Funkteilnehmer eine Frequenz wählt, die in einem territorialen Grenzbereich für einen Funkdienst des Nachbarterritoriums bzw. in einer Region eines größeren Territoriums für einen bevorrechtigten ortsfesten Funkdienst reserviert ist. Damit nun der mobile Funkteilnehmer bei Annäherung in den territorialen Grenzbereich bzw. in die genannte Region nicht die Gefahr einer Störung der anderen Funkdienste heraufbeschwört, ist gemäß einer Weiterbildung der vorliegenden Erfindung vorgesehen, dass abhängig von dem durch das Ortungssystem festgestellten Aufenthaltsort des Funkgerätes eine Warnmeldung, beispielsweise optischer oder akustischer Art, erzeugt wird, die den Benutzer des Funkgerätes veranlassen soll, die für das andere Territorium bzw. für die bevorrechtigten Funkdienste der betreffenden Region reservierte Funkfrequenz zu verfassen und sich eine neue Funkfrequenz auszusuchen, die er dann seinem Kommunikationspartner mitteilen muss, damit der Funkverkehr auf der neuen Frequenz fortgesetzt werden kann. Es kann weiterhin vorgesehen werden, dass der Sendebetrieb auf der eingestellten Funkfrequenz für den gewarnten Teilnehmer gesperrt wird, wenn dieser nicht nach Ablauf einer gewissen Zeitperiode nach Abgabe der Warnmitteilung die Frequenz gewechselt oder den betreffenden Grenzbereich oder die Region verlassen hat. Die Steuerung des vorgenannten Frequenzwechsels kann gemäß einer Weiterbildung der Erfindung auch automatisch erfolgen, einschließlich einer Mitteilung der gewählten neuen Frequenz an den Partner der laufenden Funkkommunikation. Hierdurch kann eine weitgehend unterbrechungsfreie Funkkommunikation sichergestellt werden.

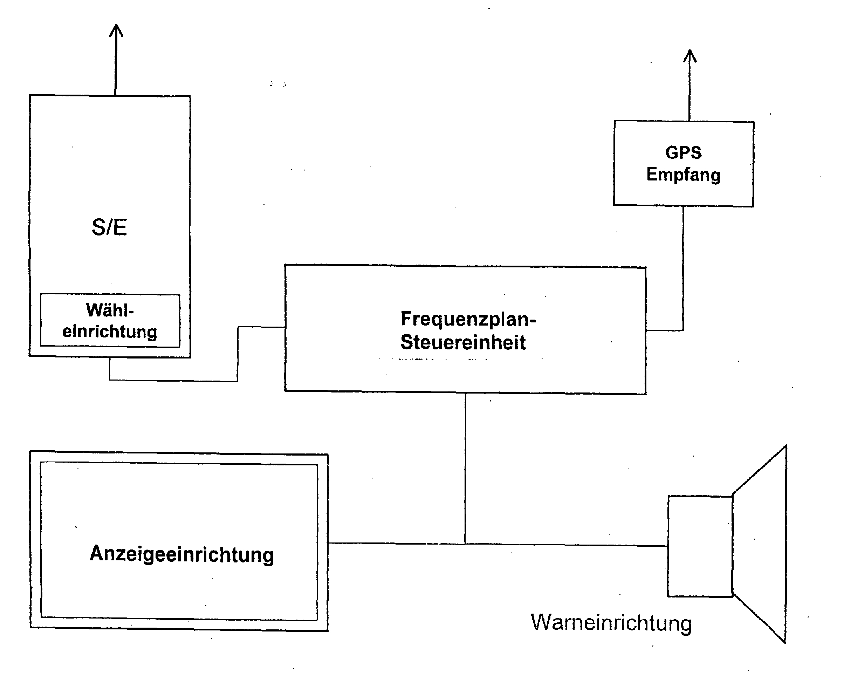

Die Zeichnung zeigt ein Blockschaltbild eines mobilen Funkgeräts mit den Merkmalen der Erfindung, das für die Ausführung des beschriebenen Verfahrens geeignet ist.

Das mobile Funkgerät enthält eine Antenne, die an eine Sende/Empfangsschaltung S/E angeschlossen ist. Die Sende/Empfangsschaltung enthält eine Wähleinrichtung zur Auswahl einer für den Funkbetrieb zu verwendenden Funkfrequenz.

Die Sende/Empfangsschaltung ist mit einer Frequenzplan-Steuereinheit verbunden, die einen Speicher (nicht dargestellt) enthält, in dem Daten entsprechend aller in einem vorgegebenen Frequenzspektrum für den Funkbetrieb vorgegebener Funkfrequenzen gespeichert sind. Weiterhin enthält die Frequenzplan-Steuereinheit einen geographische Ortskoordinaten speichernden Speicher (nicht dargestellt). In diesem sind bestimmte geographische Ortskoordinaten in Zuordnung zu einzelnen Funkfrequenzen gespeichert, die für andere Funkdienste reserviert sind. Die Frequenzplan-Steuereinheit enthält weiterhin eine Steuereinrichtung (nicht dargestellt), mit der einzelne dieser Funkfrequenzen für die Benutzung in dem Frequenzdatenspeicher gesperrt werden können.

Das mobile Funkgerät enthält ferner einen GPS-Empänger, der mit der Frequenzplan-Steuereinheit verbunden ist und mit dessen Hilfe die augenblickliche geographische Position des Funkgeräts ermittelt werden kann.

Ferner sind in dem Funkgerät eine Anzeigeeinrichtung und eine akustische Wameinrichtung vorgesehen, die mit der Frequenzplan-Steuereinheit verbunden sind.

Die Frequenzplan-Steuereinheit ist dazu eingerichtet, die von dem GPS-Empfänger kommenden Ortskoordinatensignale mit den in dem Ortskoordinatenspeicher gespeicherten Ortskoordinaten zu vergleichen und bei einer Übereinstimmung die den gespeicherten Ortskoordinaten zugeordneten Funkfrequenzen im Frequenzdatenspeicher gegen den Zugriff durch die Wähleinrichtung der Sende/Empfangsschaltung zu sperren und die Anzeige auf der Anzeigeeinrichtung entsprechend zu so steuern, dass in den dort angezeigten Funkfrequenzen die für die Auswahl nicht zur Verfügung stehenden Funkfrequenzen nicht erscheinen.

Die akustische Warneinrichtung ist von der Frequenzplan-Steuereinheit so gesteuert, dass sie ein akustisches Warnsignal abgibt, wenn sich während des eingerichteten Funkbetriebes durch den fortlaufenden Ortskoordinatenvergleich herausstellt, dass sich das mobile Funkgerät in eine Ortskoordinate bewegt hat, die im Ortskoordinatenspeicher enthalten ist, und die augenblicklich eingestellte Funkfrequenz mit derjenigen übereinstimmt, die der betreffenden Ortskoordinate zugeordnet ist. Ggf. kann die Frequenzplan-Steuereinheit einen Zeitschalter (nicht dargestellt) enthalten, der die Funkkommunikation nach Ablauf einer vorbestimmten Zeit nach Ertönen des Warnsignals unterbricht, sofern nicht zwischenzeitlich ein Frequenzwechsel stattgefunden hat.

## Patentansprüche

1. Verfahren zur Verbesserung der Ausnutzung eines vorgegebenen Funkfrequenzbands, das in einem Frequenzplan mit mehreren vorgegebenen Funkfrequenzen unterteilt ist, die jeweils für mit einem Funkgerät ausgestatteten bewegliche Funkteilnehmerunter Berücksichtigung der augenblicklichen geographischen Position dieser Funkteilnehmer verfügbar sein sollen, wobei das Funkgerät des beweglichen Funkteilnehmersmit einer den Frequenzplan und zugeordnete geographische Positionsdaten speichernden Speichereinrichtung sowie einer Ortsermittlungseinrichtung ausgerüstet ist, mit folgenden Verfahrensschritten:
- Ermittlung der jeweiligen geographischen Position des Funkgeräts durch die Ortsermittlungseinrichtung, **gekennzeichnet durch** folgende Verfahrensschritte
- Freigabe für die Auswahl **durch** den Funkteilnehmer selbst und in Abhängigkeit von der ermitteltenPosition des Funkgeräts von vorbestimmten, für die betreffende geographische Position in dem Frequenzplan zugelassenen Funkfrequenzen aus der Speichereinrichtung,
- Auswahl eine dieser freigegebenen Funkfrequenzen **durch** den Funkteilnehmer,
- Zuweisung für die Benutzung einer dieser freigegebenen Funkfrequenzen an den Funkteilnehmer.

2. Verfahren nach Anspruch 1, **dadurch gekennzeichnet, dass** eine einmal erfolgte Funkfrequenzauswahl und -zuweisung an den beweglichen Funkteilnehmer unter Berücksichtigung der augenblicklichen geographischen Position des Funkteilnehmers durch diesen selbst aktualisiert wird.

3. Verfahren nach Anspruch 2, **dadurch gekennzeichnet, dass** beim beweglichen Funkteilnehmer in Abhängigkeit von seiner augenblicklichen geographischen Position Warnmitteilungen erzeugt werden.

4. Verfahren nach Anspruch 3, **dadurch gekennzeichnet, dass** die zugewiesene Funkfrequenz beim beweglichen Funkteilnehmer unter Berücksichtigung der augenblicklichen geographischen Position desselben gesperrt wird, wenn der bewegliche Funkteilnehmer nicht innerhalb eines vorgegebenen Zeitraums nach Erzeugung der Warnmitteilung die Auswahl und Zuweisung einer neuen, zulässigen Frunkfrequenz vollzogen hat.

5. Verfahren nach einem der vorhergehenden Ansprüche, **dadurch gekennzeichnet, dass** die Auswahl und Zuweisung einer Funkfrequenz durch manuelle Einstellung an der Station des beweglichen Funkteilnehmers erfolgen.

6. Verfahren nach einem der vorhergehenden Ansprüche, **dadurch gekennzeichnet, dass** die Ermittlung der geographischen Position des beweglichen Funkteilnehmers mit Hilfe eines satellitengestützten Ortungssystems ausgeführt wird.

7. Verfahren nach einem der vorhergehenden Ansprüche, **dadurch gekennzeichnet, dass** der bewegliche Funkteilnehmer in Abhängigkeit von seiner augenblicklichen geographischen Position einen Frequenzwechsel unter vorheriger Aussendung von Information über die neu einzustellende Funkfreqzenz an einen augenblicklichen Kommunikationspartner auslöst.

8. Funkgerät zur Ausführung des Verfahrens nach einem der vorhergehenden Ansprüche, mit folgenden Komponenten:
- eine Sende/Empfangsschaltung,
- eine Frequenzplan-Steuereinheit, die folgenden weiteren Komponenten enthält:
• einen Ortskoordinatenspeicher, in dem vorgegebene Ortskoordinaten in Zuordnung zu Funkfrequenzen innerhalb desselben Funkfrequenzbandes gespeichert sind,
• eine Vergleichseinrichtung, die dazu eingerichtet ist, von der Ortsermittlungseinrichtung gelieferte Ortskoordinaten mit den gespeicherten Ortskoordinaten zu vergleichen,
- eine Einrichtung zur Ermittlung des augenblicklichen geographischen Orts des Funkgerätes, die mit der geräteinternen Frequenzplan-Steuereinheit verbunden ist, **gekennzeichnet durch** eine mit der Sende/Empfangsschaltung verbundene Frequerlzwähleirlrichtung, zur Auswahl der für den Funkbetrieb zu verwendenden Funkfrequenz, die so eingerichtet ist, dass bei Übereinstimmung der von der Ortsermittlungseinrichtung gelieferten Ortskoordinaten mit den im Ortskoordinatenspeicher gespeicherten Ortskoordinaten die zugeordnete Funkfrequenz gegen den Zugriff **durch** die Frequenzwähleinrichtung gesperrt wird.

9. Funkgerät nach Anspruch 8, **dadurch gekennzeichnet, dass** die Einrichtung zur Ermittlung des augenblicklichen geographischen Orts der Empfänger eines satellitengestützten Ortsermittlungssystems ist.

10. Funkgerät nach Anspruch 8 oder 9, **dadurch gekennzeichnet, dass** es eine Warneinrichtung und einen Zeitschalter enthält und der Zeitschalter dazu eingerichtet ist, den Sendebetrieb der Sende/Empfangsschaltung zu sperren, wenn innerhalb einer von dem Zeitschalter vorgegebenen Zeitdauer nach Abgabe eines Warnsignals an der Warneinrichtung kein Frequenzwechsel erfolgt ist.

## Claims

1. Method for improving the utilization of a predetermined radio frequency band which is subdivided in a frequency plan with a plurality of predetermined radio frequencies which should in each case be available for mobile radio subscribers equipped with a radio, taking account of the instantaneous geographic position of these radio subscribers, with the radio of the mobile radio subscriber being equipped with a memory device, which stores the frequency plan and the associated geographic position data, and with a position-finding device, having the following method steps:
- determination of the respective geographic position of the radio by the position-finding device
**characterized by** the following method steps
- enabling for the selection process by the radio subscriber himself and as a function of the determined position of the radio of predetermined radio frequencies, which are permissible for the relevant geographic position in the frequency plan, from the memory device,
- selection of one of these enabled radio frequencies by the radio subscriber,
- assignment to the radio subscriber for the use of one of these enabled radio frequencies.

2. Method according to Claim 1, **characterized in that**, once a radio frequency selection and assignment have been made to the mobile radio subscriber, it is updated by the radio subscriber himself, taking account of the instantaneous geographic position of the radio subscriber.

3. Method according to Claim 2, **characterized in that** warning messages are produced for the mobile radio subscriber as a function of his instantaneous geographic position.

4. Method according to Claim 3, **characterized in that** the assigned radio frequency for the mobile radio subscriber is inhibited taking account of the instantaneous geographic position of the radio subscriber when the mobile radio subscriber has not completed the selection and assignment of a new, permissible radio frequency within a predetermined time after production of the warning message.

5. Method according to one of the preceding claims,
**characterized in that** the selection and assignment of a radio frequency are carried out by manual setting on the station of the mobile radio subscriber.

6. Method according to one of the preceding claims,
**characterized in that** the geographic position of the mobile radio subscriber is determined with the aid of a satellite-assisted position-finding system.

7. Method according to one of the preceding claims,
**characterized in that** the mobile radio subscriber initiates a frequency change, as a function of his instantaneous geographic position, with information relating to the radio frequency to be newly selected having previously been transmitted to an instantaneous communication partner.

8. Radio for carrying out the method according to one of the preceding claims, having the following components:
- a transmitting/receiving circuit,
- a frequency-plan control unit which contains the following components:
• a position coordinate memory in which predetermined position coordinates are stored, associated with radio frequencies within the same radio frequency band,
• a comparison device, which is designed to compare position coordinates produced by the position-finding device with the stored position coordinates,
- a device for determination of the instantaneous geographic position of the radio, which device is connected to the frequency-plan control unit within the appliance
**characterized by** a frequency selection device which is connected to the transmitting/receiving circuit, for selection of the radio frequency to be used for radio operation, which frequency selection device is designed such that, when the position coordinates produced by the position-finding device match the position coordinates stored in the position coordinate memory, the associated radio frequency is inhibited against access by the frequency selection device.

9. Radio according to Claim 8, **characterized in that** the device for determination of the instantaneous geographic position is the receiver of a satellite-assisted position-finding system.

10. Radio according to Claim 8 or 9, **characterized in that** the radio contains a warn device and a time switch, and the time switch is designed to inhibit the transmission mode of the transmitting/receiving circuit when no frequency change has taken place within a time period which is predetermined by the time switch, after emission of a warning signal on the warning device.

## Revendications

1. Procédé pour améliorer l'utilisation d'une bande de fréquence radio prédéfinie, qui est subdivisée dans un plan de fréquence avec plusieurs fréquences radio prédéfinies, lesquelles doivent être disponibles respectivement pour des abonnés radio mobiles et équipés d'un appareil radio compte tenu de la position géographique momentanée de ces abonnés radio, l'appareil radio de l'abonné radio mobile étant équipé d'un dispositif de mémorisation mémorisant le plan de fréquence et des données de position géographiques attribuées et d'un dispositif de localisation, comprenant les étapes de procédé suivantes :
- détermination de la position géographique respective de l'appareil radio par le dispositif de localisation,
**caractérisé par** les étapes de procédé suivantes
- autorisation pour la sélection par l'abonné radio même et en fonction de la position déterminée de l'appareil radio de fréquences radio prédéfinies, autorisées pour la position géographique concernée dans le plan de fréquence, provenant du dispositif de mémorisation,
- sélection de l'une de ces fréquences radio autorisées par l'abonné radio,
- allocation pour l'utilisation de l'une de ces fréquences radio autorisées à l'abonné radio.

2. Procédé selon la revendication 1, **caractérisé en ce qu'**une sélection et une allocation de fréquence radio effectuées une fois à l'abonné radio mobile sont actualisées en tenant compte de la position géographique momentanée de l'abonné radio par celui-ci même.

3. Procédé selon la revendication 2, **caractérisé en ce que**, pour l'abonné radio mobile, des informations d'avertissement sont générées en fonction de sa position géographique momentanée.

4. Procédé selon la revendication 3, **caractérisé en ce que** la fréquence radio attribuée est bloquée pour l'abonné radio mobile en tenant compte de la position géographique instantanée de l'abonné, lorsque l'abonné radio mobile n'a pas effectué en l'espace d'une période prédéfinie, après la génération de l'information d'avertissement, la sélection et l'attribution d'une nouvelle fréquence radio autorisée.

5. Procédé selon l'une quelconque des revendications précédentes, **caractérisé en ce que** la sélection et l'attribution d'une fréquence radio s'effectuent par le réglage manuel sur la station de l'abonné radio mobile.

6. Procédé selon l'une quelconque des revendications précédentes, **caractérisé en ce que** la détermination de la position géographique de l'abonné radio mobile est réalisée à l'aide d'un système de localisation appuyé par satellite.

7. Procédé selon l'une quelconque des revendications précédentes, **caractérisé en ce que** l'abonné radio mobile déclenche en fonction de sa position géographique instantanée un changement de fréquence avec l'envoi préalable d'information relative à la nouvelle fréquence radio à régler à un partenaire de communication momentané.

8. Appareil radio pour la mise en oeuvre du procédé selon l'une quelconque des revendications précédentes, présentant les composants suivante
- un circuit d'émission/réception,
- une unité de commande de plan de fréquence qui contient les autres composants suivants :
• une mémoire de coordonnées locales dans laquelle sont stockées des coordonnées locales prédéfinies dans l'attribution à des fréquences radio à l'intérieur de la même bande de fréquence radio,
• un dispositif de comparaison qui est conçu pour comparer des coordonnées locales fournies par le dispositif de localisation avec les coordonnées locales stockées,
- un dispositif pour déterminer le lieu géographique momentané de l'appareil radio qui est' relié à l'unité de commande de plan de fréquence interne à l'appareil,
**caractérisé par** un dispositif de sélection de fréquence relié au circuit d'émission/réception, pour la sélection de la fréquence radio à utiliser pour le mode radio, qui est conçue de telle sorte que, en cas de concordance des coordonnées locales fournies par le dispositif de localisation avec les coordonnées locales stockées dans la mémoire de coordonnées locales, la fréquence radio attribuée est bloquée contre l'accès par le dispositif de sélection de fréquence.

9. Appareil radio selon la revendication 8,
**caractérisé en ce que** le dispositif pour la détermination du lieu géographique momentané est le récepteur d'un système de localisation appuyé par satellite.

10. Appareil radio selon la revendication 8 ou 9, **caractérisé en ce qu'**il contient un dispositif d'avertissement et une minuterie et la minuterie est conçue pour bloquer le mode émission du circuit d'émission/réception lorsqu'aucun changement de fréquence n'est effectué dans une durée prédéfinie par la minuterie après l'envoi d'un signal d'avertissement sur le dispositif d'avertissement.
